# EUROPEAN PATENT APPLICATION

(11) **EP 4 672 768 A1**
(43) Date of publication of application: **31.12.2025**
(21) Application number: 24759613.3
(22) Date of filing: 18.02.2024
(51) Int. Cl.: H04N 23/50

(54) **SHOOTING CIRCUIT, SHOOTING METHOD, AND ELECTRONIC DEVICE**

(30) Priority: 20.02.2023 CN 202310138278
(71) Applicant: Vivo Mobile Communication Co., Ltd., Dongguan, Guangdong 523863 (CN)
(72) Inventor: WANG, Hai, Dongguan, Guangdong 523863 (CN)
(74) Representative: Murgitroyd & Company
(86) International application number: PCT/CN2024/077370
(87) International publication number: WO 2024/174936

(57) **Abstract**

This application discloses a photographing circuit, a photographing method, and an electronic device, and pertains to the field of electronic circuit technologies. The photographing circuit is applied to an electronic device, and includes an external image stabilization chip and at least two camera modules. The external image stabilization chip includes a first image stabilization module, any one of the camera modules includes a motor and a camera driven by the motor, and the first image stabilization module is connected to each motor. The first image stabilization module is configured to: obtain a motion amount of the electronic device, and send a corresponding motion instruction to each target motor based on the motion amount, where a target motor is a motor in a target camera module in an on state. The motor is configured to drive, based on the motion instruction in a case that the motion instruction is received, a corresponding camera to move.

## Description

### CROSS-REFERENCE

This application claims priority to Chinese Patent Application No. 202310138278.4, filed with the China National Intellectual Property Administration on February 20, 2023 and entitled "PHOTOGRAPHING CIRCUIT, PHOTOGRAPHING METHOD, AND ELECTRONIC DEVICE", which is incorporated herein by reference in its entirety.

### TECHNICAL FIELD

This application pertains to the field of electronic circuit technologies, and specifically, relates to a photographing circuit, a photographing method, and an electronic device.

### BACKGROUND

With the development of the economy and technology, smartphones have become increasingly widely used. As a result, consumers place an increasingly high requirement on photographing capabilities of the smartphones.

Currently, the image stabilization technology has become one of important technologies for improving a photographing capability of a smartphone. The image stabilization technology is specifically as follows: An image stabilization module is disposed for each camera module; for any image stabilization module, a shaking amount of the smartphone is determined based on the image stabilization module; and a corresponding camera is adjusted based on the shaking amount.

However, a current smartphone usually includes a plurality of camera modules. As a result, when an image stabilization module is disposed for each camera module, a size of the smartphone is increased due to a large quantity of image stabilization modules, and consequently, the smartphone cannot be made thinner and lighter. Currently, thinness and lightness of the smartphone is one of current important research directions of the smartphone.

### SUMMARY

An objective of embodiments of this application is to provide a photographing circuit, a photographing method, and an electronic device, to resolve a problem that a smartphone cannot be made thinner and lighter because an image stabilization module is disposed for each camera module.

According to a first aspect, an embodiment of this application provides a photographing circuit. The photographing circuit is applied to an electronic device, and includes an external image stabilization chip and at least two camera modules.

The external image stabilization chip includes a first image stabilization module, any one of the camera modules includes a motor and a camera driven by the motor, and the first image stabilization module is connected to each motor.

The first image stabilization module is configured to: obtain a motion amount of the electronic device, and send a corresponding motion instruction to each target motor based on the motion amount, where the target motor is a motor in a target camera module in an on state.

The motor is configured to drive, based on the motion instruction in a case that the motion instruction is received, a corresponding camera to move.

According to a second aspect, an embodiment of this application provides a photographing method. The method is applied to the photographing circuit according to the first aspect, and includes:
obtaining, by the first image stabilization module, a motion amount of the electronic device, and sending a corresponding motion instruction to each target motor based on the motion amount, where the target motor is a motor in a target camera module in an on state; and
driving, by the motor based on the motion instruction in a case that the motion instruction is received, a corresponding camera to move.

According to a third aspect, an embodiment of this application provides an electronic device. The electronic device includes the photographing circuit according to the first aspect.

According to a fourth aspect, an embodiment of this application provides a readable storage medium. The readable storage medium stores a program or instructions, and when the program or instructions are executed by a processor, the steps of the method according to the second aspect are implemented.

According to a fifth aspect, an embodiment of this application provides a chip. The chip includes a processor and a communication interface. The communication interface is coupled to the processor. The processor is configured to run a program or instructions, to implement the method according to the second aspect.

According to a sixth aspect, an embodiment of this application provides a computer program product. The program product is stored in a storage medium, and the program product is executed by at least one processor to implement the method according to the second aspect.

In the embodiments of this application, a photographing circuit is provided and is applied to an electronic device, and includes an external image stabilization chip and at least two camera modules. The external image stabilization chip includes a first image stabilization module, any one of the camera modules includes a motor and a camera driven by the motor. The first image stabilization module is connected to each motor. The first image stabilization module is configured to: obtain a motion amount of the electronic device, and send a corresponding motion instruction to each target motor based on the motion amount, where the target motor is a motor in a target camera module in an on state. The motor is configured to drive, based on the motion instruction in a case that the motion instruction is received, a corresponding camera to move. In the embodiments of this application, image stabilization for at least two camera modules is implemented by using one external image stabilization chip, that is, an image stabilization module does not need to be disposed for each camera module in a one-to-one correspondence. In a case that the electronic device includes a plurality of camera modules, the following problem can be avoided: A size of the electronic device is increased due to a large quantity of image stabilization modules in the electronic device, and consequently, the electronic device cannot be made thinner and lighter.

### BRIEF DESCRIPTION OF DRAWINGS

FIG. 1 is a first schematic diagram of a structure of a photographing circuit according to an embodiment of this application;
FIG. 2 is a second schematic diagram of a structure of a photographing circuit according to an embodiment of this application;
FIG. 3 is a third schematic diagram of a structure of a photographing circuit according to an embodiment of this application;
FIG. 4 is a fourth schematic diagram of a structure of a photographing circuit according to an embodiment of this application;
FIG. 5 is a fifth schematic diagram of a structure of a photographing circuit according to an embodiment of this application;
FIG. 6 is a sixth schematic diagram of a structure of a photographing circuit according to an embodiment of this application;
FIG. 7 is a schematic flowchart of a photographing method according to an embodiment of this application; and
FIG. 8 is a schematic diagram of a hardware structure of an electronic device for implementing an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

In the specification and claims of this application, the terms such as "first" and "second" are intended to distinguish between similar objects instead of describing a specified order or sequence. It should be understood that, data used in this way may be interchangeable under appropriate circumstances, so that the embodiments of this application can be implemented in an order other than that illustrated or described herein. Moreover, the terms such as "first", "second", and the like typically distinguish between objects of one category rather than limiting a quantity of objects. For example, there may be one or more first objects. In addition, in the specification and claims, "and/or" represents at least one of connected objects, and the character "/" usually represents an "or" relationship between associated objects.

A photographing circuit, a photographing method, and an electronic device provided in the embodiments of this application are described below in detail with reference to the accompanying drawings by using specific embodiments and application scenarios thereof.

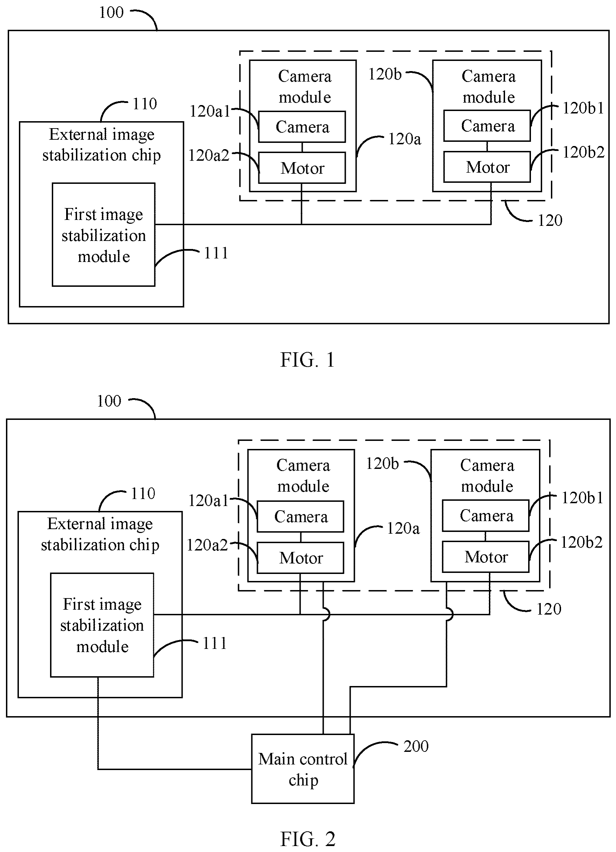

An embodiment of this application provides a photographing circuit 100, which is applied to an electronic device. As shown in FIG. 1, the photographing circuit 100 includes an external image stabilization chip 110 and at least two camera modules 120.

The external image stabilization chip 110 includes a first image stabilization module 111, any one of the camera modules 120 includes a motor and a camera driven by the motor, and the first image stabilization module 111 is connected to each motor.

The first image stabilization module 111 is configured to: obtain a motion amount of the electronic device, and send a corresponding motion instruction to each target motor based on the motion amount, where the target motor is a motor in a target camera module in an on state.

The motor is configured to drive, based on the motion instruction in a case that the motion instruction is received, a corresponding camera to move.

It should be noted that, FIG. 1 shows an example in which the photographing circuit 100 includes two camera modules 120, and the two camera modules 120 are respectively a camera module 120a and a camera module 120b. The camera module 120a includes a camera 120a1 and a motor 120a2, and the camera module 120b includes a camera 120b1 and a motor 120b2.

In an embodiment of this application, the at least two camera modules 120 may include at least one front-facing camera module and/or at least one rear-facing camera module. Both the front-facing camera module and the rear-facing camera module may be any one of a wide-angle camera module, a main camera module, a portrait camera module, or a long-focus camera module. It should be noted that types of the front-facing camera module and the rear-facing camera module are not limited in this embodiment of this application.

In this embodiment of this application, in a case that the electronic device shakes, the camera module 120 fastened to the electronic device also shakes. Based on this, the motion amount of the electronic device is a motion amount generated when the at least two camera modules 120 shakes. The motion amount is used to indicate a motion amplitude of the electronic device, and the motion amplitude may include a rotation amplitude and/or a movement amplitude. Based on this, for example, the motion amplitude may be described by a tilt angle and/or a movement amount, or the like.

The first image stabilization module 111 pre-stores a mapping relationship between a motion amount corresponding to each camera module and a motion instruction corresponding to a motor. After obtaining the motion amount, the first image stabilization module 111 searches the mapping relationship to obtain a motion instruction corresponding to each target motor. Further, the first image stabilization module 111 sends the corresponding motion instruction to each target motor. The motion instruction is an instruction for restoring the camera in the camera module 120 to a position at which the camera is located before shaking of the electronic device. In an embodiment of this application, a specific form of the motion instruction may be a current or a voltage that drives the motor to rotate.

In an embodiment of this application, that the first image stabilization module 111 obtains the motion amount of the electronic device, and sends the corresponding motion instruction to each target motor based on the motion amount may be specifically implemented as follows.

The first image stabilization module 111 runs a main thread and sub-threads that are in a one-to-one correspondence with the camera modules. The main thread is configured to obtain the motion amount and enable a sub-thread corresponding to the target camera module. In a case that the sub-thread is enabled, the sub-thread obtains the motion amount from the main thread, and sends a corresponding motion instruction to a corresponding motor based on the motion amount.

In a case that the motion instruction is received, the motor drives, based on the motion instruction, the camera to move. In this case, the camera is restored to the position at which the camera is located before shaking of the electronic device. In this way, image stabilization for the camera module in the electronic device is implemented.

It may be understood that the target motor is specifically a motor that receives the motion instruction.

With reference to the foregoing content, in this embodiment of this application, image stabilization for at least two camera modules is implemented by using one external image stabilization chip, that is, an image stabilization module does not need to be disposed for each camera module in a one-to-one correspondence. In this way, in a case that the electronic device includes a plurality of camera modules, the following problem can be avoided: A size of the electronic device is increased due to a large quantity of image stabilization modules in the electronic device, and consequently, the electronic device cannot be made thinner and lighter, software and hardware costs are high, power consumption of two or more camera modules is high when the two or more camera modules are in a working state, and a calibration consistency problem exists between the plurality of image stabilization modules.

In this embodiment of this application, a photographing circuit is provided and is applied to an electronic device, and includes an external image stabilization chip and at least two camera modules. The external image stabilization chip includes a first image stabilization module, any one of the camera modules includes a motor and a camera driven by the motor. The first image stabilization module is connected to each motor. The first image stabilization module is configured to: obtain a motion amount of the electronic device, and send a corresponding motion instruction to each target motor based on the motion amount, where the target motor is a motor in a target camera module in an on state. The motor is configured to drive, based on the motion instruction in a case that the motion instruction is received, a corresponding camera to move. In this embodiment of this application, image stabilization for at least two camera modules is implemented by using one external image stabilization chip, that is, an image stabilization module does not need to be disposed for each camera module in a one-to-one correspondence. In this way, in a case that the electronic device includes a plurality of camera modules, the following problem can be avoided: A size of the electronic device is increased due to a large quantity of image stabilization modules in the electronic device, and consequently, the electronic device cannot be made thinner and lighter.

In an embodiment of this application, as shown in FIG. 2, the electronic device further includes a main control chip 200. The first image stabilization module 111 is connected to the main control chip 200 in the electronic device. The first image stabilization module 111 is configured to: obtain running states of the at least two camera modules 120 from the main control chip 200, and determine the target motor based on the running states.

In an embodiment of this application, the first image stabilization module 111 is connected to the main control chip 200 through an inter-integrated circuit (Inter-Integrated Circuit, I2C) bus. For example, the main control chip 200 may be an application processor (Application Processor, AP) chip.

In this embodiment of this application, for example, the main control chip 200 is connected to each camera module 120 through an MIPI interface, to determine a running state of each camera module. The running state includes "running" and "not running".

The first image stabilization module 111 directly obtains the running states of the at least two camera modules 120 from the main control chip 200. After obtaining the running states of the at least two camera modules 120, the first image stabilization module 111 determines, based on the running states, which of the at least two camera modules 120 is in the running state of "running". Further, the first image stabilization module 111 determines the camera module 120 in the running state of "running" as the target camera module. Further, the motor in the target camera module is used as the target motor.

In this embodiment of this application, the first image stabilization module 111 directly obtains the running states of the at least two camera modules from the main control module 200, and the first image stabilization module 111 does not need to determine the running states of the at least two camera modules by itself. In this way, use of computing resources of the first image stabilization module 111 can be reduced.

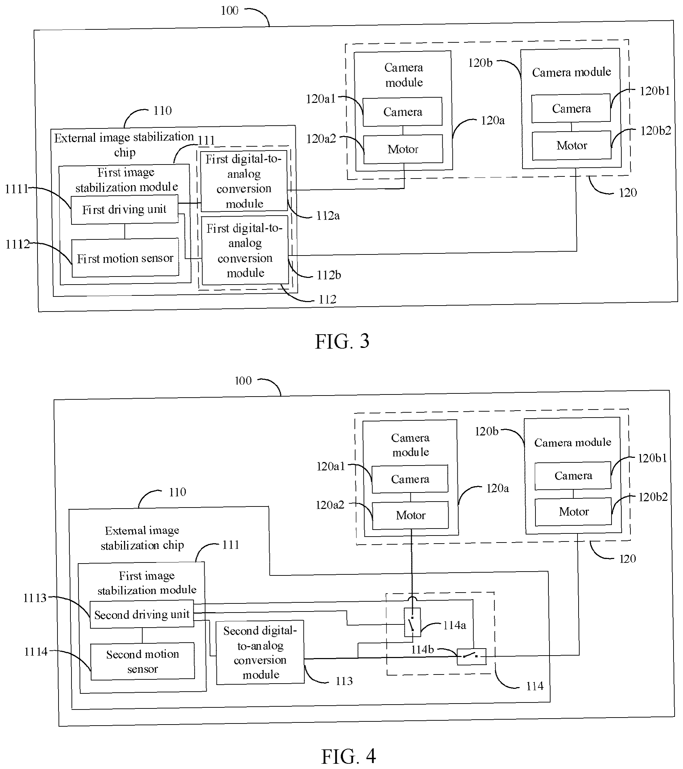

In an embodiment of this application, as shown in FIG. 3, the first image stabilization module 111 includes a first driving unit 1111 and a first motion sensor 1112, the external image stabilization chip 110 further includes a first digital-to-analog conversion module 112 that is in a one-to-one correspondence with each motor, the first driving unit 1111 is separately connected to a corresponding motor by using the first digital-to-analog conversion module 112, and the first driving unit 1111 is further connected to the first motion sensor 1112.

The first motion sensor 1112 is configured to collect motion information of the electronic device.

The first driving unit 1111 is configured to: obtain the motion information from the first motion sensor 1112, determine the motion amount based on the motion information, and send, based on the motion amount, a corresponding digital motion instruction to the first digital-to-analog conversion module 112 corresponding to each target motor.

The first digital-to-analog conversion module 112 is configured to: in a case that the digital motion instruction is received, convert the digital motion instruction into an analog motion instruction, and send the analog motion instruction to a corresponding motor.

It should be noted that, FIG. 2 shows an example in which the external image stabilization chip 110 includes two first digital-to-analog conversion modules 112. In addition, the two first digital-to-analog conversion modules 112 are respectively a first digital-to-analog conversion module 112a and a first digital-to-analog conversion module 112b.

In an example of this application, for example, the first motion sensor 1112 may be a gyroscope sensor, and the gyroscope sensor is configured to collect a three-axis angular velocity. In other words, in this embodiment of this application, the motion information of the electronic device may be specifically a three-axis angular velocity of the electronic device.

For example, the motion information of the electronic device is the three-axis angular velocity of the electronic device. A specific implementation in which the first driving unit 1111 determines the motion amount based on the motion information may be: performing an integral operation on the three-axis angular velocity of the electronic device to calculate a tilt angle of the electronic device generated due to shaking, that is, to calculate the motion amount of the electronic device.

Further, the first driving unit 1111 sends, based on a shaking amount, the corresponding digital motion instruction to the first digital-to-analog conversion module 112 corresponding to each target motor. In a case that the digital motion instruction is received, the first digital-to-analog conversion module 112 converts the digital motion instruction into the analog motion instruction, and sends the analog motion instruction to a corresponding motor. It may be understood that the digital motion instruction is specifically received by the first digital-to-analog conversion module corresponding to the target motor.

In this embodiment of this application, an implementation of the external image stabilization chip is provided.

In an embodiment of this application, as shown in FIG. 4, the first image stabilization module 111 includes a second driving unit 1113 and a second motion sensor 1114, the external image stabilization chip 110 further includes a second digital-to-analog conversion module 113 and a switch 114 that is in a one-to-one correspondence with each motor, the second driving unit 1113 is separately connected to the second motion sensor 1114, the second digital-to-analog conversion module 113, and a control terminal of each switch 114, and the second digital-to-analog conversion module 1113 is separately connected to a corresponding motor by using the switch 114.

The second motion sensor 1114 is configured to collect motion information of the electronic device.

The second driving unit 1113 is configured to: obtain the motion information from the second motion sensor 1114, determine the motion amount based on the motion information, send, to the second digital-to-analog conversion module 113 in a time division manner based on the motion amount, a digital motion instruction corresponding to each target motor, and control a target switch to be turned on, where the target switch is a switch corresponding to a target motor corresponding to the digital motion instruction sent at a current moment.

The second digital-to-analog conversion module 113 is configured to: in a case that the digital motion instruction is received, convert the digital motion instruction into an analog motion instruction, and send the corresponding analog motion instruction to the target motor.

It should be noted that, FIG. 4 shows an example in which the external image stabilization chip includes two switches 114. The two switches 114 are specifically a switch 114a and a switch 114b. In addition, specific implementation of the second motion sensor 1114 is the same as that of the first motion sensor 1112, and details are not described herein again.

In this embodiment of this application, the second driving unit 1113 sends, to the second digital-to-analog conversion module 113 in a time division manner, digital motion instructions corresponding to different target motors; and controls the switch corresponding to the target motor corresponding to the digital motion instruction sent at the current moment to be turned on. In this case, in a case that the second digital-to-analog conversion module 113 converts the digital motion instruction into the analog motion instruction, the second digital-to-analog conversion module 113 can send the analog motion instruction to the matched target motor.

In an example, this embodiment is described by using an example in which target motors are respectively the motor 120a2 and the motor 120b2; and the second driving unit sends, to the second digital-to-analog conversion module 113 in a t1-t2 time period, a digital motion instruction corresponding to the motor 120a2, and sends, to the second digital-to-analog conversion module 113 in a t2-t3 time period, a digital motion instruction corresponding to the motor 120b2. Details are as follows.

The second driving unit sends, to the second digital-to-analog conversion module 113 in the t1-t2 time period, the digital motion instruction corresponding to the motor 120a2. In addition, the second driving unit further controls, in the t1-t2 time period, the switch 114a to be turned on. In this case, the second digital-to-analog conversion module 113 converts, in the t1-t2 time period, the digital motion instruction corresponding to the motor 120a2 into an analog motion instruction, and sends the analog motion instruction. Because the switch 114a is turned on and the switch 114b is turned off, the motor 120a2 receives the analog motion instruction, and the motor 120b2 does not receive the analog motion instruction. Further, the second driving unit sends, to the second digital-to-analog conversion module 113 in the t2-t3 time period, the digital motion instruction corresponding to the motor 120b2. In addition, the second driving unit controls, in the t2-t3 time period, the switch 114b to be turned on and the switch 114a to turned off. In this case, the second digital-to-analog conversion module converts, in the t2-t3 time period, the digital motion instruction corresponding to the motor 120b2 into an analog motion instruction, and sends the analog motion instruction. Because the switch 114b is turned on and the switch 114a is turned off, the motor 120b2 receives the analog motion instruction, and the motor 120a2 does not receive the analog motion instruction.

It should be noted that the switch that is in a one-to-one correspondence with the motor may be implemented by using a single-pole multi-throw switch.

In this embodiment of this application, one second digital-to-analog conversion module is used to send the analog motion instruction to a plurality of target motors. In this way, a quantity of components in the photographing circuit provided in this embodiment of this application can be reduced, thereby reducing hardware costs of the photographing circuit provided in this embodiment of this application.

With reference to the embodiments shown in FIG. 3 and FIG. 4, considering factors such as hardware costs and hardware design, two digital-to-analog conversion modules may be disposed in the external image stabilization chip 110, where one digital-to-analog conversion module is connected to a motor in a front-facing camera module, and the other digital-to-analog conversion module is connected to a motor in each of rear-facing camera modules.

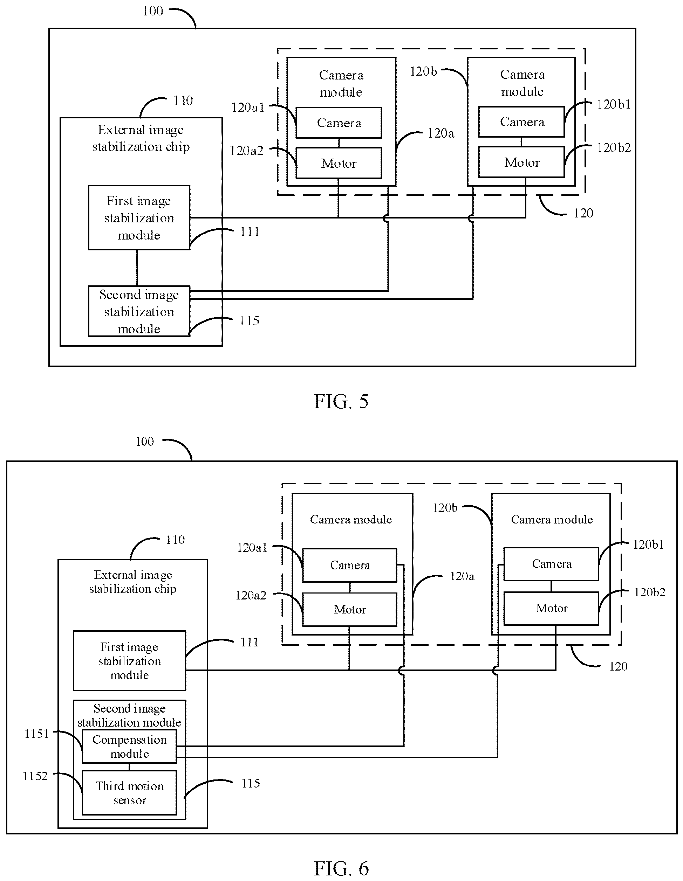

In an embodiment of this application, as shown in FIG. 5, the external image stabilization chip 110 provided in this embodiment of this application further includes a second image stabilization module 115, and the second image stabilization module 115 is connected to each of the camera modules 120.

The second image stabilization module 115 is configured to: obtain the motion amount of the electronic device, obtain, for any target camera module, a first image captured by the target camera module, and generate a second image based on the first image and the motion amount.

In this embodiment of this application, for example, the second image stabilization module 115 is an electronic image stabilization module. For example, the second image stabilization module 115 may be connected to each of the camera modules 120 through a mobile industry processor interface (MIPI). An image captured by the camera module 120 is denoted as the first image.

In this embodiment of this application, the second image stabilization module 115 compensates for the first image based on the motion amount (for example, when the motion amount indicates that the electronic device rotates by 30° clockwise, the first image is rotated by 30° counterclockwise) to obtain the second image. In this way, image stabilization for the camera module can be implemented at a software level.

In an embodiment of this application, after the second image stabilization module 115 obtains the second image, the second image stabilization module 115 can send the second image to an image post-processing module in the electronic device.

In this embodiment of this application, the second image stabilization module 115 is disposed on the external image stabilization chip provided in this embodiment of this application. Based on this, the external image stabilization chip provided in this embodiment of this application may further implement image stabilization for the camera module at the software level.

In an embodiment of this application, the second image stabilization module 115 detects the motion amount of the electronic device, to obtain the motion amount of the electronic device. Based on this, as shown in FIG. 6, the second image stabilization module includes a third motion sensor 1152 and a compensation module 1151. The compensation module 1151 is connected to the third motion sensor 1152, and the compensation module 1151 is connected to each of the camera modules 120.

The third motion sensor 1152 is configured to collect motion information of the electronic device.

The compensation module 1151 is configured to: obtain the motion information from the third motion sensor, determine the motion amount based on the motion information, obtain, for any target camera module, the first image captured by the target camera module, and generate the second image based on the first image and the motion amount.

It should be noted that in this embodiment of this application, a relationship between the third motion sensor 1152 and the second image stabilization module 115 may be specifically as follows: The entire large second image stabilization module 115 includes the third motion sensor.

In this embodiment of this application, an implementation in which the second image stabilization module obtains the motion amount is provided.

In another embodiment of this application, the second image stabilization module 115 may obtain the motion amount from the first image stabilization module 111. Based on this, as shown in FIG. 5, the second image stabilization module 115 is connected to the first image stabilization module 111, and the second image stabilization module 115 is configured to obtain the motion amount of the electronic device from the first image stabilization module 111.

In this embodiment of this application, the second image stabilization module 115 does not need to detect the motion amount of the electronic device. In this way, use of computing resources of the second image stabilization module 115 can be reduced, and compatibility of the first image stabilization module 114 is improved.

An embodiment of this application further provides an electronic device, and the electronic device includes the photographing circuit 100 provided in any one of the foregoing embodiments.

In an embodiment of this application, for example, the electronic device may be a mobile phone, a tablet computer, a notebook computer, an augmented reality (augmented reality, AR)/virtual reality (virtual reality, VR) device, a robot, a wearable device, or the like. This is not specifically limited in this embodiment of this application.

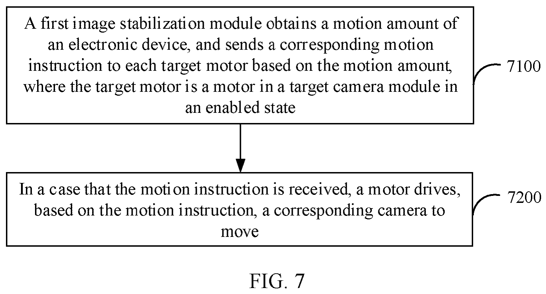

This application further provides a photographing method, and the method is applied to the photographing circuit provided in any one of the foregoing embodiments. As shown in FIG. 7, the method includes the following steps.

S7100: The first image stabilization module obtains a motion amount of the electronic device, and sends a corresponding motion instruction to each target motor based on the motion amount, where the target motor is a motor in a target camera module in an on state.

S7200: In a case that the motion instruction is received, the motor drives, based on the motion instruction, a corresponding camera to move.

In this embodiment of this application, image stabilization for at least two camera modules is implemented by using one external image stabilization chip, that is, an image stabilization module does not need to be disposed for each camera module in a one-to-one correspondence. In this way, in a case that the electronic device includes a plurality of camera modules, the following problem can be avoided: A size of the electronic device is increased due to a large quantity of image stabilization modules in the electronic device, and consequently, the electronic device cannot be made thinner and lighter, software and hardware costs are high, power consumption of two or more camera modules is high when the two or more camera modules are in a working state, and a calibration consistency problem exists between the plurality of image stabilization modules.

In an embodiment of this application, before S7100 of sending the corresponding motion instruction to each target motor based on the motion amount, the photographing method provided in this embodiment of this application further includes the following step.

S7300: The first image stabilization module obtains running states of the camera modules from a main control chip, and determines the target motor based on the running states.

In an embodiment of this application, S7100 in which the first image stabilization module obtains the motion amount of the electronic device includes the following steps.

S11: The first motion sensor collects motion information of the electronic device.

S12: The first driving unit determines the motion amount based on the motion information.

In this embodiment, S7100 in which the first image stabilization module sends the corresponding motion instruction to each target motor based on the motion amount includes the following steps.

S13: The first driving unit sends, based on the motion amount, a corresponding digital motion instruction to the first digital-to-analog conversion module corresponding to each target motor.

S14: In a case that the digital motion instruction is received, the first digital-to-analog conversion module converts the digital motion instruction into an analog motion instruction, and sends the analog motion instruction to a corresponding motor.

In an embodiment of this application, S7100 in which the first image stabilization module obtains the motion amount of the electronic device includes the following steps.

S21: The second motion sensor collects motion information of the electronic device.

S22: The second driving unit obtains the motion information from the second motion sensor, and determines the motion amount based on the motion information.

In this embodiment, S7100 in which the first image stabilization module sends the corresponding motion instruction to each target motor based on the motion amount includes the following steps.

S23: The second driving module sends, to the second digital-to-analog conversion module in a time division manner based on the motion amount, a digital motion instruction corresponding to each target motor, and controls a target switch to be turned on, where the target switch is a switch corresponding to a target motor corresponding to the digital motion instruction sent at a current moment.

S24: In a case that the digital motion instruction is received, the second digital-to-analog conversion module converts the digital motion instruction into an analog motion instruction, and sends the corresponding analog motion instruction to the target motor.

In an embodiment of this application, the photographing method provided in this embodiment of this application further includes the following S7400.

S7400: The second image stabilization module obtains the motion amount of the electronic device, obtains, for any target camera module, a first image captured by the target camera module, and generates a second image based on the first image and the motion amount.

In an embodiment of this application, S7400 is specifically implemented by using the following steps.

S31: The third motion sensor collects motion information of the electronic device.

S32: The compensation module obtains the motion information from the third motion sensor, determines the motion amount based on the motion information, obtains, for any target camera module, the first image captured by the target camera module, and generates the second image based on the first image and the motion amount.

In an embodiment of this application, S7400 in which the second image stabilization module obtains the motion amount of the electronic device includes: The second image stabilization module obtains the motion amount of the electronic device from the first image stabilization module.

It should be noted that for implementation of each step in the foregoing method embodiment, refer to related specific implementation in the foregoing photographing circuit. Details are not described herein again.

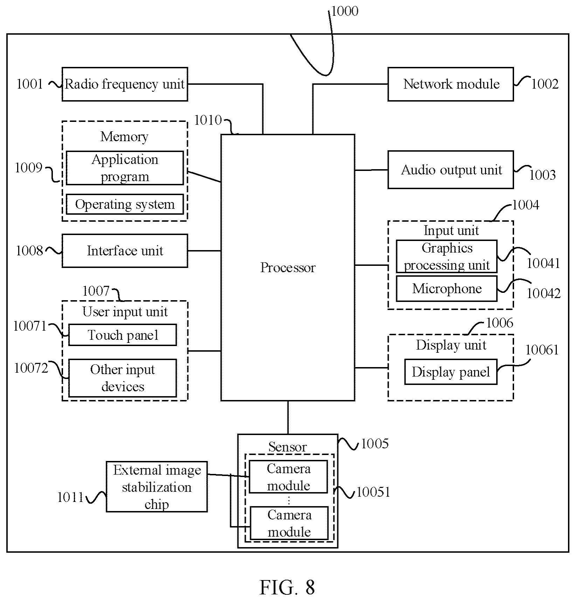

FIG. 8 is a schematic diagram of a hardware structure of an electronic device for implementing an embodiment of this application.

The electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, a processor 1010, and an external image stabilization chip 1011. The sensor 1005 includes at least two camera modules 10051.

A person skilled in the art may understand that the electronic device 1000 may further include a power supply (for example, a battery) that supplies power to each component, and the power supply may be logically connected to the processor 1010 by using a power management system, to implement functions such as charging management, discharging management, and power consumption management by using the power management system. The structure of the electronic device shown in FIG. 8 constitutes no limitation on the electronic device. The electronic device may include more or fewer components than those shown in the figure, or combine some components, or have different component arrangements. Details are not described herein again.

The external image stabilization chip 1011 includes a first image stabilization module, any one of the camera modules includes a motor and a camera driven by the motor, and the first image stabilization module is connected to each motor.

The first image stabilization module is configured to: obtain a motion amount of the electronic device, and send a corresponding motion instruction to each target motor based on the motion amount, where the target motor is a motor in a target camera module in an on state.

The motor is configured to drive, based on the motion instruction in a case that the motion instruction is received, a corresponding camera to move.

In this embodiment of this application, image stabilization for at least two camera modules is implemented by using one external image stabilization chip, that is, an image stabilization module does not need to be disposed for each camera module in a one-to-one correspondence. In this way, in a case that the electronic device includes a plurality of camera modules, the following problem can be avoided: A size of the electronic device is increased due to a large quantity of image stabilization modules in the electronic device, and consequently, the electronic device cannot be made thinner and lighter.

Optionally, the first image stabilization module is connected to a main control chip in the electronic device, and the first image stabilization module is further configured to: obtain running states of the camera modules from the main control chip, and determine the target motor based on the running states.

The main control chip may be a chip on which the processor 1010 in FIG. 8 is located.

Optionally, the first image stabilization module includes a first driving unit and a first motion sensor, the external image stabilization chip further includes a first digital-to-analog conversion module that is in a one-to-one correspondence with each motor, the first driving unit is connected to a corresponding motor by using each first digital-to-analog conversion module, and the first driving unit is further connected to the first motion sensor.

The first motion sensor is configured to collect motion information of the electronic device.

The first driving unit is configured to: determine the motion amount based on the motion information, and send, based on the motion amount, a corresponding digital motion instruction to the first digital-to-analog conversion module corresponding to each target motor.

The first digital-to-analog conversion module is configured to: in a case that the digital motion instruction is received, convert the digital motion instruction into an analog motion instruction, and send the analog motion instruction to a corresponding motor.

Optionally, the first image stabilization module includes a second driving unit and a second motion sensor, the external image stabilization chip further includes a second digital-to-analog conversion module and a switch that is in a one-to-one correspondence with each motor, the second driving unit is separately connected to the second motion sensor, the second digital-to-analog conversion module, and a control terminal of each switch, and the second digital-to-analog conversion module is connected to a corresponding motor by using each switch.

The second motion sensor is configured to collect motion information of the electronic device.

The second driving unit is configured to: obtain the motion information from the second motion sensor, determine the motion amount based on the motion information, send, to the second digital-to-analog conversion module in a time division manner based on the motion amount, a digital motion instruction corresponding to each target motor, and control a target switch to be turned on, where the target switch is a switch corresponding to a target motor corresponding to the digital motion instruction sent at a current moment.

The second digital-to-analog conversion module is configured to: in a case that the digital motion instruction is received, convert the digital motion instruction into an analog motion instruction, and send the corresponding analog motion instruction to the target motor.

Optionally, the external image stabilization chip further includes a second image stabilization module, and the second image stabilization module is connected to each of the camera modules.

The second image stabilization module is configured to: obtain the motion amount of the electronic device, obtain, for any target camera module, a first image captured by the target camera module, and generate a second image based on the first image and the motion amount.

Optionally, the second image stabilization module includes a third motion sensor and a compensation module, the compensation module is connected to the third motion sensor, and the compensation module is connected to each of the camera modules.

The third motion sensor is configured to collect motion information of the electronic device.

The compensation module is configured to: obtain the motion information from the third motion sensor, determine the motion amount based on the motion information, obtain, for any target camera module, the first image captured by the target camera module, and generate the second image based on the first image and the motion amount.

Optionally, the second image stabilization module is connected to the first image stabilization module, and the second image stabilization module is configured to obtain the motion amount of the electronic device from the first image stabilization module.

It should be understood that in this embodiment of this application, the input unit 1004 may include a graphics processing unit (Graphics Processing Unit, GPU) 10041 and a microphone 10042, and the graphics processing unit 10041 processes image data of a still picture or a video obtained by an image capture apparatus (for example, a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or an on/off key), a trackball, a mouse, and a joystick. Details are not described herein again.

The memory 1009 may be configured to store a software program and various data. The memory 1009 may mainly include a first storage area for storing a program or instructions and a second storage area for storing data. The first storage area may store an operating system, an application program or instructions required by at least one function (for example, a sound play function or an image play function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1009 in this embodiment of this application includes but is not limited to these memories and any other suitable type of memory.

The processor 1010 may include one or more processing units. Optionally, the processor 1010 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor may not be integrated into the processor 1010.

An embodiment of this application further provides a readable storage medium. The readable storage medium stores a program or instructions. When the program or the instructions are executed by a processor, the processes in the foregoing photographing method embodiments are implemented, and same technical effects can be achieved. To avoid repetition, details are not described herein again.

The processor is a processor in the electronic device in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes in the foregoing embodiments of the photographing method, and same technical effects can be achieved. To avoid repetition, details are not described herein again.

It should be understood that, the chip mentioned in this embodiment of this application may also be referred to as a system-level chip, a system chip, a chip system, or a system on chip.

An embodiment of this application provides a computer program product. The program product is stored in a storage medium. The program product is executed by at least one processor to implement the processes in the foregoing embodiments of the photographing method, and same technical effects can be achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a ..." does not preclude the existence of additional identical elements in the process, method, article, or apparatus that includes the element. In addition, it should be noted that, the scope of the method and apparatus in the implementations of this application is not limited to performing functions in a sequence shown or discussed, and may further include performing functions in a basically simultaneous manner or in a reverse order based on the functions involved. For example, the described method may be performed in an order different from the order described, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by software and a necessary general-purpose hardware platform, or certainly may be implemented by hardware. However, in many cases, the former is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many other manners without departing from principles of this application and the protection scope of the claims, and all such manners fall within the protection scope of this application.

## Claims

1. A photographing circuit, applied to an electronic device, comprising an external image stabilization chip and at least two camera modules, wherein
the external image stabilization chip comprises a first image stabilization module, any one of the camera modules comprises a motor and a camera driven by the motor, and the first image stabilization module is connected to each motor;
the first image stabilization module is configured to: obtain a motion amount of the electronic device, and send a corresponding motion instruction to each target motor based on the motion amount, wherein a target motor is a motor in a target camera module in an on state; and
the motor is configured to drive, based on the motion instruction in a case that the motion instruction is received, a corresponding camera to move.

2. The circuit according to claim 1, wherein the first image stabilization module is connected to a main control chip in the electronic device, and the first image stabilization module is configured to: obtain running states of the at least two camera modules from the main control chip, and determine the target motor based on the running states.

3. The method according to claim 1, wherein
the first image stabilization module comprises a first driving unit and a first motion sensor, the external image stabilization chip further comprises a first digital-to-analog conversion module that is in a one-to-one correspondence with each motor, the first driving unit is connected to a corresponding motor by using each first digital-to-analog conversion module, and the first driving unit is further connected to the first motion sensor;
the first motion sensor is configured to collect motion information of the electronic device;
the first driving unit is configured to: obtain the motion information from the first motion sensor, determine the motion amount based on the motion information, and send, based on the motion amount, a corresponding digital motion instruction to a first digital-to-analog conversion module corresponding to each target motor; and
the first digital-to-analog conversion module is configured to: in a case that the digital motion instruction is received, convert the digital motion instruction into an analog motion instruction, and send the analog motion instruction to the corresponding motor.

4. The circuit according to claim 1, wherein the first image stabilization module comprises a second driving unit and a second motion sensor, the external image stabilization chip further comprises a second digital-to-analog conversion module and a switch that is in a one-to-one correspondence with each motor, the second driving unit is respectively connected to the second motion sensor, the second digital-to-analog conversion module, and a control terminal of each switch, and the second digital-to-analog conversion module is connected to a corresponding motor by using each switch;
the second motion sensor is configured to collect motion information of the electronic device;
the second driving unit is configured to: obtain the motion information from the second motion sensor, determine the motion amount based on the motion information, send, to the second digital-to-analog conversion module in a time division manner based on the motion amount, a digital motion instruction corresponding to each target motor, and control a target switch to be turned on, wherein the target switch is a switch corresponding to a target motor corresponding to the digital motion instruction sent at a current moment; and
the second digital-to-analog conversion module is configured to: in a case that the digital motion instruction is received, convert the digital motion instruction into an analog motion instruction, and send the corresponding analog motion instruction to the target motor.

5. The circuit according to claim 1, wherein the external image stabilization chip further comprises a second image stabilization module, and the second image stabilization module is connected to each of the camera modules; and
the second image stabilization module is configured to: obtain the motion amount of the electronic device, obtain, for any target camera module, a first image captured by the target camera module, and generate a second image based on the first image and the motion amount.

6. The circuit according to claim 5, wherein the second image stabilization module comprises a third motion sensor and a compensation module, the compensation module is connected to the third motion sensor, and the compensation module is connected to each of the camera modules;
the third motion sensor is configured to collect motion information of the electronic device; and
the compensation module is configured to: obtain the motion information from the third motion sensor, determine the motion amount based on the motion information, obtain, for any target camera module, the first image captured by the target camera module, and generate the second image based on the first image and the motion amount.

7. The circuit according to claim 5, wherein the second image stabilization module is connected to the first image stabilization module, and the second image stabilization module is configured to obtain the motion amount of the electronic device from the first image stabilization module.

8. A photographing method, wherein the method is applied to the photographing circuit according to any one of claims 1 to 7, and comprises:
obtaining, by the first image stabilization module, the motion amount of the electronic device, and sending the corresponding motion instruction to each target motor based on the motion amount, wherein the target motor is the motor in the target camera module in the on state; and
driving, by the motor based on the motion instruction in a case that the motion instruction is received, the corresponding camera to move.

9. The method according to claim 8, wherein the first image stabilization module comprises a first driving unit and a first motion sensor, the external image stabilization chip further comprises a first digital-to-analog conversion module that is in a one-to-one correspondence with each motor, and the obtaining, by the first image stabilization module, the motion amount of the electronic device comprises:
collecting, by the first motion sensor, motion information of the electronic device; and
determining, by the first driving unit, the motion amount based on the motion information;
and
the sending, by the first image stabilization module, the corresponding motion instruction to each target motor based on the motion amount comprises:
sending, by the first driving unit based on the motion amount, a corresponding digital motion instruction to a first digital-to-analog conversion module corresponding to each target motor; and
in a case that the digital motion instruction is received, converting, by the first digital-to-analog conversion module, the digital motion instruction into an analog motion instruction, and sending the analog motion instruction to the corresponding motor.

10. The method according to claim 8, wherein the method further comprises:
obtaining, by a second image stabilization module, the motion amount of the electronic device, obtaining, for any target camera module, a first image captured by the target camera module, and generating a second image based on the first image and the motion amount, wherein
the second image stabilization module obtains the motion amount of the electronic device from the first image stabilization module.

11. An electronic device, wherein the electronic device comprises the photographing circuit according to any one of claims 1 to 7.

12. A readable storage medium, wherein the readable storage medium stores a program or instructions, and when the program or the instructions are executed by a processor, the steps of the photographing method according to any one of claims 8 to 10 are implemented.

13. A chip, wherein the chip comprises a processor and a communication interface, the communication interface is coupled to the processor, and the processor is configured to run a program or instructions to implement the steps of the photographing method according to any one of claims 8 to 10.

14. A computer program product, wherein the program product is stored in a storage medium, and the program product is executed by at least one processor to implement the steps of the photographing method according to any one of claims 8 to 10.
